# EUROPEAN PATENT SPECIFICATION

(11) **EP 1 443 278 B1**
(45) Date of publication and mention of the grant of the patent: **14.02.2007**
(21) Application number: 03292761.8
(22) Date of filing: 04.11.2003
(51) Int. Cl.: F24F 3/14, F24F 11/00

(54) **Dehumidification method of an air conditioner**
Entfeuchtungsverfahren einer Klimaanlage
Procede de deshumidification d'un appareil de climatisation

(30) Priority: 30.01.2003 KR 2003006085
(43) Date of publication of application: 04.08.2004
(73) Proprietor: LG ELECTRONICS INC., Seoul (KR)
(72) Inventor: Choi, Ho Seon, Dongjak-gu, Seoul (KR); Lee, Gi Seop, Namdong-gu, Incheon-si (KR); Yum, Kwan Ho, Guro-gu, Seoul (KR); Ryu, Yun Ho, Gangnam-gu, Seoul (KR); Huh, Deok, Bucheon-si, Gyeonggi-do (KR); Oh, Il Kwon, Seongdong-gu, Seoul (KR)
(74) Representative: Pichat, Thierry

(56) References cited:
- EP-A- 0 893 657
- US-A- 4 744 223
- US-A- 4 813 474
- US-A- 5 062 276
- US-A- 5 345 776
- US-A- 5 353 862
- PATENT ABSTRACTS OF JAPAN vol. 006, no. 184 (M-157), 21 September 1982 (1982-09-21) & JP 57 092635 A (TOSHIBA CORP), 9 June 1982 (1982-06-09)
- PATENT ABSTRACTS OF JAPAN vol. 010, no. 006 (M-445), 11 January 1986 (1986-01-11) & JP 60 169039 A (MITSUBISHI JUKOGYO KK), 2 September 1985 (1985-09-02)
- PATENT ABSTRACTS OF JAPAN vol. 008, no. 124 (M-301), 9 June 1984 (1984-06-09) & JP 59 027145 A (TOKYO SHIBAURA DENKI KK), 13 February 1984 (1984-02-13)

## Description

### Field of the Invention

The present invention relates to a dehumidification operation method of an air condition, and more particularly to a power dehumidification operation method of an air condition, in which the compressor frequency is determined according to the humidity difference between a set humidity and the indoor humidity, and the revolution rate of an outdoor fan is adjusted according to the temperature difference between a set temperature and the indoor temperature to thereby minimize an arrival time of the set humidity.

### Description of the Related Art

In general, an air conditioner provided with a dehumidification function is aimed to remove moisture by arranging a first heat exchanger functioning as a condenser and a second heat exchanger functioning as an evaporator in an indoor heat exchanger unit which is disposed indoors.

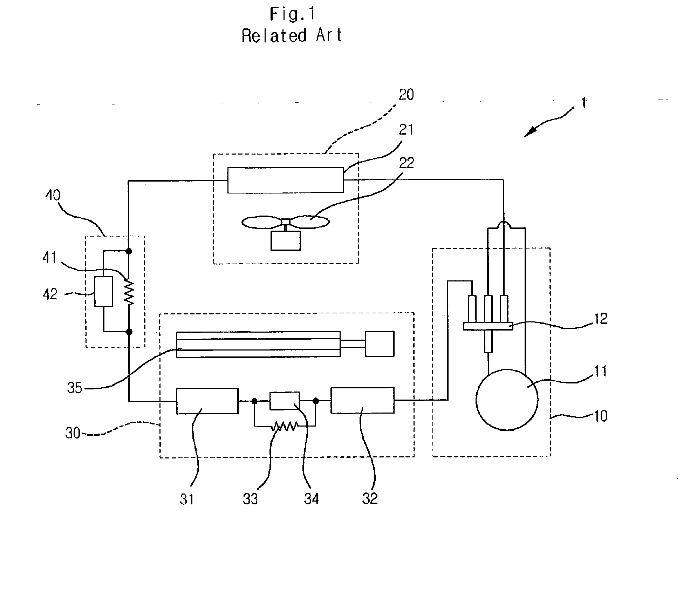

FIG. 1 schematically shows a conventional air conditioner 1.

As shown in FIG. 1, a conventional air conditioner with a dehumidification function includes a compressor unit 10 for compressing coolant, an outdoor heat exchanger unit 20, an indoor heat exchanger unit 30 and an expansion unit 40 disposed between the outdoor heat exchanger unit 20 and the indoor heat exchanger unit 30. The outdoor heat exchanger unit 20 has a heat exchanger 21 and a fan 22 to enable heat exchange between coolant and outdoor air. The indoor heat exchanger unit 30 has a first heat exchanger 31, a second heat exchanger 32 and indoor expanders 33 and 34 disposed between the first and the second heat exchangers 31 and 32.

In more detail, the compressor unit 10 has a compressor 11 for converting low temperature and pressure gas coolant dispensed from the outdoor heat exchanger unit 20 or the indoor heat exchanger unit 30 into high temperature and pressure gas coolant, and a four-way valve 12 for regulating the dispensing direction of the compressor 11.

The four-way valve 12 switches suction and exhaust ducts of the compressor 11 so that the indoor heat exchanger unit 30 may operate as an evaporator in the event of cooling the indoor or as a condenser in the event of heating the indoor.

At this time, the outdoor heat exchanger unit 20 naturally operates as the condenser or the evaporator correspondingly.

However, since description of the invention will be mainly made to the air conditioner as a dehumidifier, hereinafter it is assumed that the outdoor heat exchanger 20 operates as the condenser whereas the indoor heat exchanger 30 operates as the evaporator.

The outdoor heat exchanger unit 20 serves to convert high temperature and pressure gas coolant generated in the compressor unit 10 into middle temperature and high pressure liquid coolant, and is equipped with the condenser 21 and the fan 22 to this end.

The expansion unit 40 is means for converting middle temperature-high pressure liquid coolant dispensed from the outdoor heat exchanger unit 20 into low temperature-pressure liquid coolant. The expansion unit 40 includes a capillary 41 and a first valve 42 disposed parallel with the capillary 41 for regulating flow of liquid coolant through the capillary 41. When the air conditioner operates as a dehumidifier, it is necessary to control the pass of the coolant through the capillary 41 such that the expansion cycle in the expansion unit 40 does not occur. At this time, the first valve 42 is opened such that the liquid coolant passes through the first valve 42, so that the expansion unit 40 will not perform an expansion cycle.

As the expansion cycle is not performed as above, middle temperature-high pressure coolant is introduced into the indoor heat exchanger unit 30. Then, since the indoor heat exchanger unit 30 includes the first heat exchanger 31, the second heat exchanger 32 and the indoor expanders 33 and 34 between the first and second heat exchangers 31 and 32, the first heat exchanger 31 performs a condensing action once more while the indoor expander 33 performs the expansion cycle.

Through the above expansion cycle, middle temperature-high pressure liquid coolant is converted into low temperature-pressure liquid coolant, and the converted low temperature-pressure liquid coolant in the second heat exchanger 32 absorbs surrounding heat to be evaporated into low temperature-pressure gas coolant and the evaporated low temperature-pressure gas coolant is then introduced into the compressor unit 10.

If the air conditioner operates as a cooler instead of the dehumidifier, the expansion unit 40 performs the expansion cycle and the first heat exchanger 31 operates as an evaporator like the second heat exchanger 32. At this time, of course, the second valve 34 of the indoor expander 33 is opened to disable the indoor expander 33.

Hereinafter, an operation of the conventional air conditioner 1 with a dehumidification function will be described in brief.

In the second heat exchanger 32, as the temperature drops owing to evaporation of coolant, ambient moisture is condensed. Thus condensed moisture is discharged to the outside to carry out the dehumidification operation. Of course, since the indoor temperature is also cooled in the above process, the first heat exchanger 31 operates as a condenser to have temperature balance, thereby preventing the indoor temperature from dropping.

The conventional air conditioner performs the dehumidification operation regardless of the humidity difference between the set humidity and the indoor humidity, and the outdoor load, so that it fails to optimize the operations of the outdoor fan of the outdoor unit and the compressor. Also, it takes a long time to arrive at the set humidity in the operation of the air conditioner.

Further, from US-A 5 345 776, is disclosed a conventional power dehumidification operation method of an air conditioner, according which the frequency of a compressor is determined and the revolution rate of an outdoor fan is adjusted.

### SUMMARY OF THE INVENTION

Accordingly, the present invention is directed to a power dehumidification operation method of an air conditioner that substantially obviates one or more problems due to limitations and disadvantages of the related art.

Advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a power dehumidification operation method of an air conditioner. The method comprises the steps of: (a) detecting an indoor humidity by an indoor humidity sensor installed in the air conditioner and comparing the detected indoor humidity with a set humidity (which is set by a controller including a remote controller) to obtain a humidity difference between the detected indoor humidity and the set humidity; (b) setting the frequency of a compressor via a compressor-operating algorithm according to the humidity difference obtained in the step (a); (c) detecting an indoor temperature by an indoor temperature sensor installed in the air conditioner, and comparing the detected indoor temperature with a set temperature (which is set by the controller) to obtain a temperature difference between the detected indoor temperature and the set temperature; (d) setting the revolution rate of an outdoor fan via an outdoor fan-operating algorithm according to the temperature difference obtained in the step (c); and (e) operating the indoor and outdoor fans and the compressor according to the revolution rates and the frequency set in the steps (b) to (d), whereby an indoor dehumidification operation is continuously performed and a uniform indoor temperature is maintained in a comfortable region state so that a user can feel a comfortable indoor environment.

**[0020]** Also, the power humidification operation method may further comprise the feedback control step of: continuously judging whether the indoor humidity exists in a comfortable range and whether the uniform indoor temperature is maintained so as to maintain the indoor dehumidification and uniform indoor temperature in the comfortable region state, and repeating the steps (a) to (e) until the indoor humidity exists in the comfortable range and the uniform indoor temperature is satisfied.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:

FIG. 1 schematically shows a conventional air conditioner;

FIG. 2 is a flowchart illustrating a power dehumidification operation method of an air conditioner according to the invention;

FIG. 3 is a flowchart for setting the compressor frequency of a compressor via dehumidifying ability judgment in a power dehumidification operation method of an air conditioner according to the invention; and

FIG. 4 is a flowchart for setting the revolution rate of an outdoor fan via a cooling tendency in a power dehumidification operation method of an air conditioner according to the invention.

### DETAILED DESCRIPTION OF THE PREFERRED EMBODIMENT

Reference will now be made in detail to the preferred embodiments of the present invention, examples of which are illustrated in the accompanying drawings.

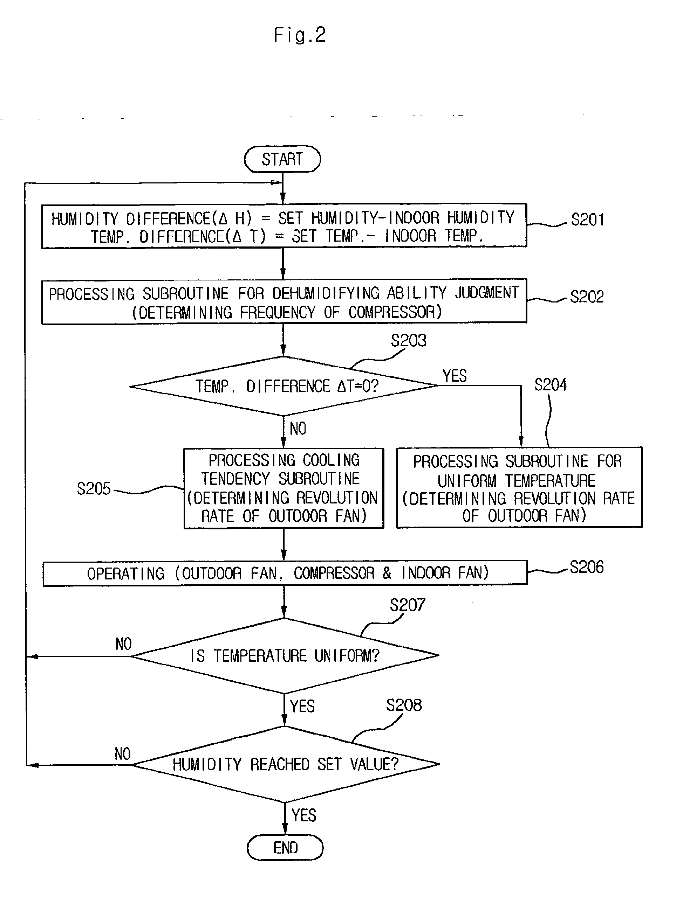

FIG. 2 is a flowchart illustrating a power dehumidification operation method of an air conditioner according to the invention.

A power dehumidification operation method of an air conditioner according to the present invention, comprises the steps of: (a) detecting an indoor humidity by an indoor humidity sensor installed in the air conditioner and comparing the detected indoor humidity with a set humidity (which is set by a controller including a remote controller) to obtain a humidity difference between the detected indoor humidity and the set humidity; (b) setting the frequency of a compressor via a compressor-operating algorithm according to the humidity difference obtained in the step (a); (c) detecting an indoor temperature by an indoor temperature sensor installed in the air conditioner, and comparing the detected indoor temperature with a set temperature (which is set by the controller) to obtain a temperature difference between the detected indoor temperature and the set temperature; (d) setting the revolution rate of an outdoor fan via an outdoor fan-operating algorithm according to the temperature difference obtained in the step (c); and (e) operating the indoor and outdoor fans and the compressor according to the revolution rates and the frequency set in the steps (b) to (d), whereby an indoor dehumidification operation is continuously performed and a uniform indoor temperature is maintained in a comfortable region state so that a user can feel a comfortable indoor environment.

Also, the power humidification operation method may further comprise the feedback control step of: continuously judging whether the indoor humidity exists in a comfortable range and whether the uniform indoor temperature is maintained so as to maintain the indoor dehumidification and uniform indoor temperature in the comfortable region state, and repeating the steps (a) to (e) until the indoor humidity exists in the comfortable range and the uniform indoor temperature is satisfied.

Also, in the power dehumidification operation method according to the present invention, the revolution rate of the indoor fan is continuously maintained at a 'special strong wind' that is the maximum revolution rate of the indoor fan while the power dehumidification operation is kept from an initial stage where the power dehumidification is selected and operated.

Referring to FIG. 2, in an indoor dehumidification operation via the air conditioner 1, the indoor humidity is detected by an indoor humidity sensor installed in the air conditioner 1. The detected indoor humidity is compared with a set humidity (i.e., humidity which is set by a controller such as a remote controller) to obtain the humidity difference.

Also, the indoor temperature is detected by an indoor temperature sensor installed in the air conditioner 1. The detected indoor temperature is compared with a set temperature (i.e., temperature which is set by a controller such as a remote controller) to obtain the temperature difference (S201).

Next, a sub-routine process for judging dehumidifying ability is carried out (S202). In the sub-routine process, the frequency of the compressor 11 is set via a compressor-operating algorithm according to the obtained humidity difference between the indoor humidify and the set humidify.

After setting the frequency of the compressor 11, a revolution rate of the outdoor fan 22 is set through the outdoor fan-operating algorithm according to the temperature difference between the indoor temperature and the set temperature obtained in the step S201.

Here, the outdoor fan-operating algorithm judges whether or not the temperature difference is 0 (S203), if the temperature difference is 0, performs the sub-routine process for uniform temperature (determining the revolution rate of the outdoor fan) (S204), and if the temperature difference is not 0, performs a cooling tendency sub-routine process (determining the revolution rate of the outdoor fan) (S205).

A case that the temperature difference is 0 is not problematic but a case that the temperature difference is not 0 is problematic. Hereinafter, it is defined that the outdoor fan-operating algorithm indicates the cooling tendency sub-routine process.

Through the compressor-operating algorithm and the outdoor fan-operating algorithm, the compressor 11 and the outdoor fan 22 are actuated to consecutively maintain a comfortable indoor dehumidification and uniform indoor temperature operation at the set frequency of the compressor 11 and the revolution rate of the outdoor fan 22 that a user can feel a comfortable indoor atmosphere (S206).

Then, it is judged whether the temperature is maintained uniformly (S207), and if the temperature is maintained uniformly, the operation proceeds to a step of judging whether the humidity reaches the set humidity (S208).

However, if the temperature is not maintained uniformly, the preceding steps S201 to S206 are repeated until the temperature is maintained uniformly.

In addition, it is judged whether the humidity reaches a set value (S208), if the humidity does not reach the set value, the preceding steps S201 to S206 are repeated until the humidity reaches the set value.

According to the invention as set forth above, the outdoor fan and the compressor are operated to achieve objects of the uniform indoor temperature and the indoor dehumidification, and then the uniform indoor temperature and the indoor dehumidification are confirmed via a feedback system. If both the uniform indoor temperature and the indoor dehumidification are satisfied, the health dehumidification operation method of an air conditioner according to the invention is completed.

Also, in the power dehumidification operation of the invention, the revolution rate of the indoor fan 35 is regulated to maintain the "special strong wind mode" during the power dehumidification operation from an initial stage in which the health dehumidification is selected and performed.

Hereinafter, there will be described in detail the power dehumidification operation method of an air conditioner according to the invention.

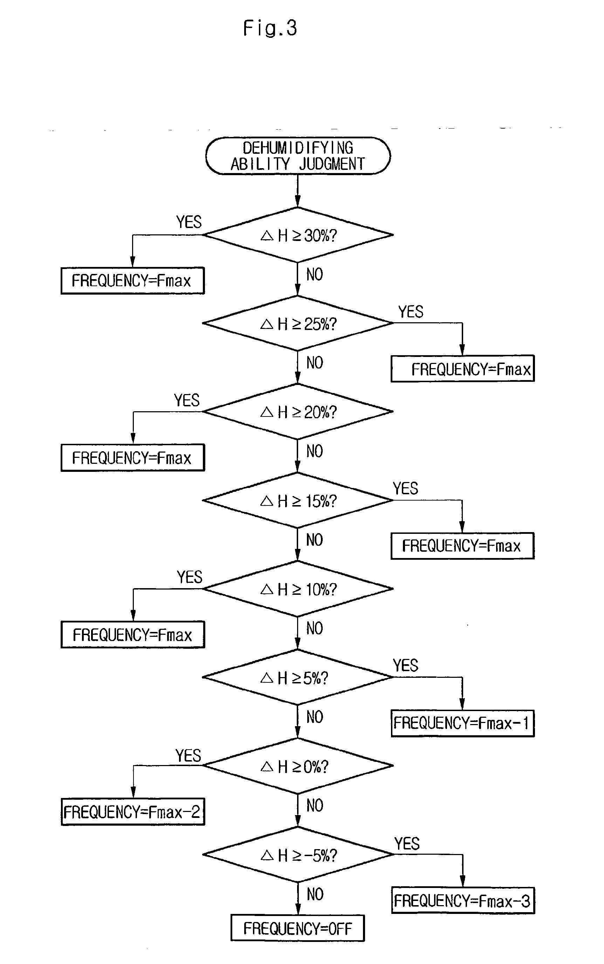

FIG. 3 is a flowchart of a compressor-operating algorithm for setting the frequency of the compressor as a method of judging dehumidification ability in the power dehumidification operation of an air conditioner of the invention.

The compressor-operating algorithm includes: a first step of detecting the indoor humidity by the indoor humidity sensor (not shown) installed in the air conditioner 1 and comparing the detected indoor humidity with the set humidity (which is set by a controller such as a remote controller) to obtain the humidity difference between the detected indoor humidity and the set humidity; a second step of comparing the humidity difference obtained in the first step with a reference humidity difference set in the air conditioner 1; and a third step of setting the frequency of the compressor 11 corresponding to the humidity difference (indoor humidity - set humidity) according to comparison in the second step.

The compressor-operating algorithm will be described in comparison with Table 1 as follows.

Table 1 reports a situation in which the frequency of the compressor 11 is adjustably controlled according to the humidity difference obtained through comparison between the indoor humidity and the set humidity (i.e., humidity set by a controller such as a remote controller) using the compressor-operating algorithm, in which ΔH is the humidity difference between the indoor humidity and the set humidity, and F is the rotation frequency of the compressor.

**Table 1**

| H: Set humidity - indoor humidity | |
|---|---|
| COMP F | |
| (Dehumidification Ability) | |
| H | F |
| H ≥ 30% | Fₘₐₓ |
| 25 %≤ H≤ 29% | Fₘₐₓ |
| 20%≤ H ≤ 24 % | Fₘₐₓ |
| 15 % ≤ H≤ 19 % | Fₘₐₓ |
| 10 % ≤H ≤ 14 % | Fₘₐₓ |
| 5% ≤ H≤ 9% | Fₘₐₓ-1 |
| 0 % ≤ H ≤ 4 % | Fₘₐₓ -2 |
| -5% ≤ H ≤ -1% | Fₘₐₓ -3 |
| H ≤-6% | OFF |

Further, referring to Table 1 and FIG. 3, hereinafter detailed description will present the compressor-operating algorithm for adjustably controlling the frequency of the compressor 11 according to the humidity difference (set humidity - indoor humidity) obtained through comparison between the indoor humidity and the set humidity.

First, it is referenced that when the humidity difference ΔH is 30% or more, the frequency of the compressor 11 is set to a maximum rotational frequency (Fₘₐₓ). When the humidity difference is greater than or equal to 10% and less than or equal to 29%, the compressor-operating algorithm maintains the frequency of the compressor 11 at the maximum rotational frequency (Fₘₐₓ).

Also, when the humidity difference is greater than or equal to 5% and less than or equal to 9%, the compressor-operating algorithm sets the frequency to a first compressor frequency Fₘₐₓ₋₁ that is lower by one step than the maximum rotational frequency (Fₘₐₓ). When the humidity difference is greater than or equal to 0% and less than or equal to 4%, the compressor-operating algorithm sets the frequency to a second compressor frequency Fₘₐₓ₋₂ that is lower by one step than the first compressor frequency Fₘₐₓ₋₁.

When the humidity difference is greater than or equal to -5% and less than or equal to -1%, the compressor-operating algorithm sets the frequency to a third compressor frequency Fₘₐₓ₋₃ that is lower by one step than the second compressor frequency Fₘₐₓ₋₂. When the humidity difference is-6% or less, the compressor-operating algorithm sets the frequency to 0 (OFF).

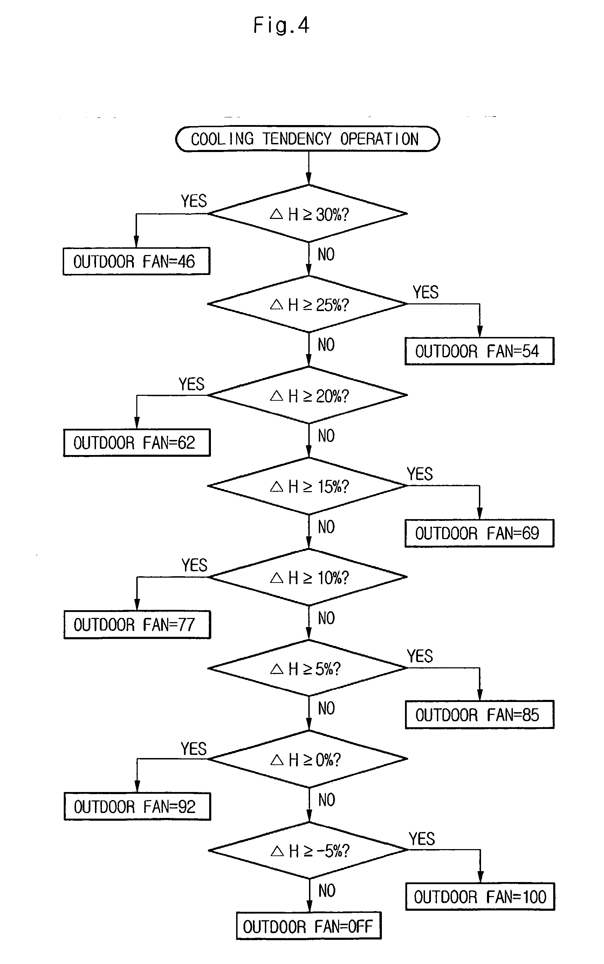

FIG. 4 is a flowchart for setting the revolution rate of an outdoor fan via a cooling tendency when the temperature difference is not 0 in a power saving dehumidification operation method of an air conditioner according to the invention.

As shown in FIGs. 2 and 4, the outdoor fan-operating algorithm includes: a first step of comparing the frequency of the compressor 11 adjustably controlled via the compressor-operating algorithm with the indoor humidity detected by the indoor humidity sensor installed in the air conditioner 1; and a second step of setting the revolution rate of the outdoor fan 22 in proportion with the adjustably controlled frequency of the compressor 11, whereby the indoor dehumidification operation can be performed in a pleasant condition via the adjustably controlled frequency of the compressor 11.

The outdoor fan-operating algorithm will be described in comparison with Table 2 as follows.

Table 2 reports a situation in which the revolution rate of the outdoor fan is adjustably controlled via the outdoor fan-operating algorithm according to the frequency and the indoor humidity of the compressor 11 set in Table 1. Here, the humidity difference (ΔH) is a difference between indoor humidity and set humidity.

**Table 2**

| H: Set humidity - indoor humidity [Unit: Percent] | |
|---|---|
| Outdoor Fan | |
| (Cooling Ability) | |
| H | Outdoor fan |
| H≥30% | 46 |
| 25%≤H≤29% | 54 |
| 20%≤H≤24% | 62 |
| 15%≤H≤19% | 69 |
| 10%≤H≤14% | 77 |
| 5%≤H≤9% | 85 |
| 0%≤H≤4% | 92 |
| -5%≤H≤-1% | 100 |
| H≤-6% | OFF |

Also, referring to Table 2 and FIG. 4, there will be described the outdoor fan-operating algorithm in which the revolution rate of the outdoor fan is variably controlled depending on the humidity difference obtained through a comparison of the indoor humidity and the set humidity.

First, it is referenced that when the humidity difference (H) is 30% or more, the revolution rate of the outdoor fan 22 is set to 46. When the humidity difference is greater than or equal to 25% and less than or equal to 29%, the revolution rate of the outdoor fan is set to 54. When the humidity difference is greater than or equal to 20% and less than or equal to 24%, the revolution rate of the outdoor fan 22 is set to 62. When the humidity difference is greater than or equal to 15% and less than or equal to 19%, the revolution rate of the outdoor fan 22 is set to 69. When the humidity difference is greater than or equal to 10% and less than or equal to 14%, the revolution rate of the outdoor fan 22 is set to 77. When the humidity difference is greater than or equal to 5% and less than or equal to 9%, the revolution rate of the outdoor fan 22 is set to 85. When the humidity difference is greater than or equal to 0% and less than or equal to 4%, the revolution rate of the outdoor fan 22 is set to 92. When the humidity difference is greater than or equal to -5% and less than or equal to -1%, the revolution rate of the outdoor fan 22 is set to 100. When the humidity difference is -6% or less, the revolution rate of the outdoor fan 22 is set to 0 (OFF).

Hereinafter, the power dehumidification operation method of an air conditioner will be described in detail as follows:

In order to continuously maintain the indoor dehumidification operation in a comfortable condition that the user can feel a comfortable indoor atmosphere, the frequency of the compressor 11 is set as follows. The indoor humidity is detected by the indoor humidity sensor (not shown) installed in the air conditioner. The detected indoor humidity is compared with a set humidity (i.e., humidity which is set by a controller such as remote controller) to obtain a difference between the detected indoor humidity and the set humidity. The humidity difference between the indoor humidity and the set humidity is compared with the reference humidity difference in the air conditioner 1 to set the frequency of the compressor 11 corresponding to the humidity difference (indoor humidity - set humidity).

Also, by comparing the humidity difference between the indoor humidity and the set humidity with the frequency of the compressor 11 corresponding to the humidity difference (indoor humidity - set humidity), the revolution rate of the outdoor fan 22 is set via the outdoor fan-operating algorithm so as to maintain or keep the indoor temperature uniform so that the indoor dehumidification operation be performed in a comfortable condition.

By driving the outdoor and indoor fans 22 and 35 and the compressor 11 set, respectively, to the revolution rates and the frequency, the indoor dehumidification operation is performed in the pleasant condition where the user can feel a pleasant indoor atmosphere. Also, the above steps are repeatedly carried out by continuously judging whether the indoor humidity exists in a comfortable range.

As set forth above, the a health dehumidification operation method of an air conditioner of the present invention optimizes the operation of the compressor, the indoor fan and the outdoor fan in response to the outdoor load in the air conditioner.

Furthermore, the present invention minimizes an arrival time to a set humidity.

## Claims

1. A power dehumidification operation method of an air conditioner (1), the method comprising the steps of determining the frequency of a compressor (11) and adjusting the revolution rate of an outdoor fan (22), **characterized in that** the power dehumidification operation method further comprises:
(a) detecting an indoor humidity by an indoor humidity sensor installed in the air conditioner (1) and comparing the detected indoor humidity with a set humidity to obtain a humidity difference (ΔH) between the detected indoor humidity and the set humidity (S208);
(b) setting the frequency of the compressor (11) via a compressor-operating algorithm according to the humidity difference (ΔH) obtained in the step (a);
(c) detecting an indoor temperature by an indoor temperature sensor installed in the air conditioner (1), and comparing the detected indoor temperature with a set temperature to obtain a temperature difference (S201) between the detected indoor temperature and the set temperature;
(d) setting the revolution rate of the outdoor fan (22) via an outdoor fan-operating algorithm according to the temperature difference (S201) obtained in the step (c); and
(e) operating the indoor (35) and outdoor (22) fans and the compressor (11) according to the revolution rates and the frequency set in the steps (b) to (d), whereby an indoor dehumidification operation is continuously performed and a uniform indoor temperature is maintained

2. The power dehumidification operation method according to claim 1, further comprising the feedback control step of:
(f) continuously judging whether the indoor humidity exists in a comfortable range and whether the uniform indoor temperature is maintained so as to maintain the indoor dehumidification and uniform indoor temperature in the comfortable region state, and repeating the steps (a) to (e) until the indoor humidity exists in the comfortable range and the uniform indoor temperature (S204) is satisfied.

3. The power dehumidification operation method according to claim 1, wherein the compressor-operating algorithm comprises the steps of:
(i) detecting the indoor humidity by the indoor humidity sensor installed in the air conditioner (1) and comparing the detected indoor humidity with the set humidity (S208) to obtain the humidity difference (ΔH) between the detected indoor humidity and the set humidity (S208);
(ii) comparing the humidity difference (ΔH) obtained in the step (i) with a reference humidity difference (ΔH) set in the air conditioner (1); and
(iii) setting the frequency of the compressor (11) corresponding to the humidity difference (ΔH) (indoor humidity - set humidity) according to comparison in the step (ii).

4. The power dehumidification operation method according to claim 1, wherein the compressor-operating algorithm sets the frequency of the compressor (11) to a maximum rotational frequency (Fₘₐₓ) if the humidity difference (ΔH) is 30% or more, maintains the maximum rotational frequency if the humidity difference (ΔH) is greater than or equal to 10% and less than or equal to 29%, sets the frequency to a first compressor (11) frequency Fₘₐₓ₋₁ that is lower by one step than the maximum rotational frequency if the humidity difference (ΔH) is greater than or equal to 5% and less than or equal to 9%, to a second compressor (11) frequency Fₘₐₓ₋₂ that is lower by one step than the first compressor (11) frequency Fₘₐₓ₋₁ if the humidity difference (ΔH) is greater than or equal to 0% and less than or equal to 4%, to a third compressor (11) frequency Fₘₐₓ₋₃ that is lower by one step than the second compressor (11) frequency Fₘₐₓ₋₂ if the humidity difference (ΔH) is greater than or equal to -5% and less than or equal to -1%, and to 0 (OFF) if the humidity difference (ΔH) is -6% or less.

5. The power dehumidification operation method according to claim 1, wherein the outdoor fan-operating algorithm comprises the steps of:
(i) comparing the frequency of the compressor (11) adjustably controlled via the compressor-operating algorithm with the indoor humidity detected by the indoor humidity sensor installed in the air conditioner (1); and
(ii) setting the revolution rate of the outdoor fan (22) in proportion with the adjustably controlled frequency of the compressor (11), whereby the indoor dehumidification operation can be performed in a pleasant condition via the adjustably controlled frequency of the compressor (11).

6. The power dehumidification operation method according to claim 1, wherein the outdoor fan-operating algorithm sets the revolution rate of the outdoor fan (22) to different values corresponding to the humidity difference (ΔH) steps, and
under a condition that a reference revolution rate of the outdoor fan (22) is set to 46 when the humidity difference (ΔH) is 30% or more, the revolution rate of the outdoor fan (22) is set to 54 when the humidity difference (ΔH) is greater than or equal to 25% and less than or equal to 29%, to 62 when the humidity difference (ΔH) is greater than or equal to 20% and less than or equal to 24%, to 69 when the humidity difference (ΔH) is greater than or equal to 15% and less than or equal to 19%, to 77 when the humidity difference (ΔH) is greater than or equal to 10% and less than or equal to 14%, to 85 when the humidity difference (ΔH) is greater than or equal to 5% and less than or equal to 9%, to 92 when the humidity difference (ΔH) is greater than or equal to 0% and less than or equal to 4%, to 100 when the humidity difference (ΔH) is greater than or equal to -5% and less than or equal to -1%, and to 0 (OFF) when the humidity difference (ΔH) is -6% or less.

7. The power dehumidification operation method according to claim 1, wherein the revolution rate of the indoor fan (35) is continuously maintained at a 'special strong wind' that is the maximum revolution rate of the indoor fan (35) while the power dehumidification operation is kept from an initial stage where the power dehumidification is selected and operated.

8. The power dehumidification operation method according to claim 1, comprising determining the frequency of the compressor (11) via the compressor-operating algorithm according to the humidity difference (ΔH) between the set humidity (S208) and the indoor humidity.

9. The power dehumidification operation method according to claim 1, comprising adjusting the revolution rate of the outdoor fan (22) via the outdoor fan-operating algorithm according to said temperature difference (S201) between the set temperature and the indoor temperature.

10. The power dehumidification operation method according to claim 1, wherein:
- in step (a), the step of comparing the detected indoor humidity with a set humidity ((208)) comprises setting said set humidity by a controller including a remote controller, and,
- in step (c), the step of comparing the detected indoor temperature with a set temperature comprises setting said set temperature by the controller.

## Patentansprüche

1. Hochleistungsentfeuchtung-Betriebsverfahren einer Klimaanlage (1), wobei das Verfahren die Schritte einer Bestimmung der Frequenz eines Kompressors (11) und einer Einstellung der Drehzahl eines Außenventilators (22) umfasst, **dadurch gekennzeichnet, dass** das Hochleistungentfeuchtung-Betriebsverfahren ferner umfasst:
(a) Erfassen einer Raumfeuchtigkeit durch eine Raumfeuchtigkeitssensor, der in der Klimaanlage (1) installiert ist, und Vergleichen der erfassten Raumfeuchtigkeit mit einer eingestellten Feuchtigkeit, um eine Feuchtigkeitsdifferenz (ΔH) zwischen der erfassten Raumfeuchtigkeit und der eingestellten Feuchtigkeit zu erhalten (S208);
(b) Einstellen der Frequenz des Kompressors (11) über einen Kompressor-Betriebsalgorithmus entsprechend der Feuchtigkeitsdifferenz (ΔH), die im Schritt (a) erhalten wurde;
(c) Erfassen einer Raumtemperatur durch einen Raumtemperatursensor, der in der Klimaanlage (1) installiert ist und Vergleichen der erfassten Raumtemperatur mit einer eingestellten Temperatur, um eine Temperaturdifferenz (S201) zwischen der erfassten Raumtemperatur und einer eingestellten Temperatur zu erhalten;
(d) Einstellen der Drehzahl des Außenventilators (22) über einen Außenventilator-Betriebsalgorithmus gemäß der Temperaturdifferenz (S201), die im Schritt (c) erhalten wurde, und
(e) Betreiben der Innen- (35) und Außen (22) -Ventilatoren und des Kompressors (11) gemäß der Drehzahlen und der Frequenz, die in den Schritten (b) bis (d) eingestellt wurde, wodurch ein Raum-Luftentfeuchtungsbetrieb kontinuierlich durchgeführt wird und eine gleichförmige Innentemperatur beibehalten wird.

2. Hochleistungentfeuchtung-Betriebsverfahren nach Anspruch 1, ferner mit dem Prozesssteuerungsschritt: (f) kontinuierliches Beurteilen, ob die Raumfeuchtigkeit in einem angenehmen Bereich liegt und ob die Raumtemperatur beibehalten wird, um so die Raum-Luftentfeuchtung und gleichmäßige Raumtemperatur in dem Zustand des angenehmen Bereichs zu halten, und Wiederholen der Schritte (a) bis (e), bis die Raumfeuchtigkeit in dem angenehmen Bereich vorliegt und die gleichmäßige Raumtemperatur (S204) erreicht ist.

3. Hochleistungs- Entfeuchtungs- Betriebsverfahren nach Anspruch 1, in welchem der Kompressor-Betriebsalgorithmus die Schritte umfasst:
(i) Erfassen der Raumfeuchtigkeit durch den Raumfeuchtigkeitssensor, der in der Klimaanlage (1) installiert ist, und Vergleichen der erfassten Raumfeuchtigkeit mit der eingestellten Feuchtigkeit (S208), um die Feuchtigkeitsdifferenz (ΔH) zwischen der erfassten Raumfeuchtigkeit und der eingestellten Feuchtigkeit (S208) zu erhalten;
(ii) Vergleichen der Feuchtigkeitsdifferenz (ΔH), die in dem Schritt (i) erhalten wurde, mit einer Bezugs-Feuchtigkeitsdifferenz (ΔH), die in der Klimaanlage (1) eingestellt ist; und
(iii) Einstellen der Frequenz des Kompressors (11) entsprechend der Feuchtigkeitsdifferenz (ΔH) (Raumfeuchtigkeit - eingestellter Feuchtigkeit) gemäß dem Vergleich im Schritt (ii).

4. Hochleistungsentfeuchtung-Betriebsverfahren nach Anspruch 1, in welchem der Kompressor-Betriebsalgorithmus die Frequenz des Kompressors (11) auf eine maximale Drehfrequenz (Fₘₐₓ) einstellt, wenn die Feuchtigkeitsdifferenz (ΔH) 30% oder mehr beträgt, die maximale Drehfrequenz beibehält, wenn die Feuchtigkeitsdifferenz (ΔH) größer oder gleich 10% und weniger oder gleich 29% beträgt, die Frequenz auf eine erste Kompressor (11)-Frequenz Fₘₐₓ₋₁ einstellt, die um eine Stufe geringer ist als die maximale Drehfrequenz, wenn die Feuchtigkeitsdifferenz (ΔH) größer oder gleich 5% und weniger oder gleich 9% beträgt, auf eine zweite Kompressor (11)-Frequenz Fₘₐₓ₋₂ einstellt, die um eine Stufe geringer ist als die erste Kompressor (11)-Frequenz F_{max-1,} wenn die Feuchtigkeitsdifferenz (ΔH) größer oder gleich 0% und weniger oder gleich 4% beträgt, auf eine dritte Kompressor (11)-Frequenz Fₘₐₓ₋₃ einstellt, die um eine Stufe geringer ist als die zweite Kompressor (11)-Frequenz Fₘₐₓ₋₂, wenn die Feuchtigkeitsdifferenz (ΔH) größer oder gleich -5% und weniger oder gleich -1% beträgt, und auf 0 (AUS), wenn die Feuchtigkeitsdifferenz (ΔH) -6% oder weniger beträgt.

5. Hochleistungsentfeuchtung-Betriebsverfahren nach Anspruch 1, in welchem der Außenventilator-Betriebsalgorithmus die Schritte umfasst:
(i) Vergleichen der über den Kompressor-Betriebsalgorithmus einstellbar gesteuerten Frequenz des Kompressors (11) mit der durch den in der Klimaanlage (1) installierten Raumfeuchtigkeitssensor erfassten Raumfeuchtigkeit;
(ii) Einstellen der Drehzahl des Außenventilators (22) in einem Verhältnis zu der einstellbar gesteuerten Frequenz des Kompressors (11), wodurch der Raum-Luftentfeuchtungsbetrieb über die einstellbar gesteuerte Frequenz des Kompressors (11) in einem angenehmen Zustand durchgeführt werden kann.

6. Hochleistungsentfeuchtung-Betriebsverfahren nach Anspruch 1, in welchem der Außenventilator-Betriebsalgorithmus die Drehzahl des Außenventilators (22) auf verschiedene Werte entsprechend der Feuchtigkeitsdifferenz (ΔH)-Schritte einstellt, und
unter einer Bedingung, dass eine Bezugs-Drehzahl des Außenventilators (22) auf 46 eingestellt wird, wenn die Feuchtigkeitsdifferenz (ΔH) 30% oder mehr beträgt, die Drehzahl des Außenventilators (22) auf 54 eingestellt wird, wenn die Feuchtigkeitsdifferenz (ΔH) größer oder gleich 25% und weniger oder gleich 29% beträgt, auf 62, wenn die Feuchtigkeitsdifferenz (ΔH) größer oder gleich 20% und weniger oder gleich 24% beträgt, auf 69, wenn die Feuchtigkeitsdifferenz (ΔH) größer oder gleich 15% und weniger oder gleich 19% beträgt, auf 77, wenn die Feuchtigkeitsdifferenz (ΔH) größer oder gleich 10% und weniger oder gleich 14% beträgt, auf 85, wenn die Feuchtigkeitsdifferenz (ΔH) größer oder gleich 5% und weniger oder gleich 9% beträgt, auf 92, wenn die Feuchtigkeitsdifferenz (ΔH) größer oder gleich 0% und weniger oder gleich 4% beträgt, auf 100, wenn die Feuchtigkeitsdifferenz (ΔH) grö-ßer oder gleich -5% und weniger oder gleich -1% beträgt, und auf 0 (AUS), wenn die Feuchtigkeitsdifferenz (ΔH) -6% oder weniger beträgt.

7. Hochleistungsentfeuchtung-Betriebsverfahren nach Anspruch 1, in welchem die Drehzahl des Außenventilator (35) kontinuierlich auf'räumlich starker Wind' gehalten wird, welches die maximale Drehzahl des Raumventilators (35) ist, während der Hochleistungs-Entfeuchtungsbetrieb von einer Anfangsstufe getrennt gehalten wird, an welcher die Hochleistungs-Entfeuchtung ausgewählt und betrieben wird.

8. Hochleistungs-Entfeuchtungs-Betriebsverfahren nach Anspruch 1, mit einem Bestimmen der Frequenz des Kompressors (11) über den Kompressor-Betriebsalgorithmus gemäß der Feuchtigkeitsdifferenz (ΔH) zwischen der eingestellten Feuchtigkeit (S208) und der Raumfeuchtigkeit.

9. Hochleistungs-Entfeuchtungs-Betriebsverfahren nach Anspruch 1, mit einem Einstellen der Drehzahl des Außenventilators (22) über den Außenventilator-Betriebsalgorithmus gemäß der Temperaturdifferenz (S201) zwischen der eingestellten Temperatur und der Raumtemperatur.

10. Hochleistungs-Entfeuchtungs-Betriebsverfahren nach Anspruch 1, in welchem:
- im Schritt (a) der Schritt des Vergleichens der erfassten Raumfeuchtigkeit mit einer eingestellten Feuchtigkeit (208) ein Einstellen der eingestellten Feuchtigkeit durch einen Regler einschließlich eines Fernreglers umfasst, und
- im Schritt (c) der Schritt des Vergleichens der erfassten Raumtemperatur mit einer eingestellten Temperatur ein Einstellen der eingestellten Temperatur durch den Regler umfasst.

## Revendications

1. Procédé d'opération de déshumidification motorisée d'un climatiseur (1), le procédé comprenant les étapes consistant à déterminer la fréquence d'un compresseur (11) et ajuster la vitesse de rotation d'un ventilateur extérieur (22), **caractérisé en ce que** le procédé d'opération de déshumidification motorisée comprend en outre :
(a) détecter une humidité intérieure par un capteur d'humidité intérieure installé dans le climatiseur (1) et comparer l'humidité intérieure détectée à une humidité de consigne pour obtenir une différence d'humidité (ΔH) entre l'humidité intérieure détectée et l'humidité de consigne (S208) ;
(b) régler la fréquence du compresseur (11) via un algorithme de fonctionnement du compresseur selon la différence d'humidité (△H) obtenue à l'étape (a) ;
(c) détecter une température intérieure par un capteur de température intérieure installé dans le climatiseur (1), et comparer la température intérieure détectée à une température de consigne pour obtenir une différence de température (S201) entre la température intérieure détectée et la température de consigne ;
(d) régler la vitesse de rotation du ventilateur extérieur (22) via un algorithme de fonctionnement du ventilateur extérieur selon la différence de température (S201) obtenue à l'étape (c) ; et
(e) faire fonctionner les ventilateurs intérieur (35) et extérieur (22) et le compresseur (11) selon les vitesses de rotation et la fréquence réglées aux étapes (b) à (d), moyennant quoi une opération de déshumidification intérieure est effectuée en continu et une température intérieure uniforme est maintenue.

2. Procédé d'opération de déshumidification motorisée selon la revendication 1, comprenant en outre l'étape commande à rétroaction consistant à :
(f) juger en continu si l'humidité intérieure existe dans une gamme confortable et si la température intérieure uniforme est maintenue de façon à maintenir la déshumidification intérieure et la température intérieure uniforme dans l'état de région confortable, et répéter les étapes (a) à (e) jusqu'à ce que l'humidité intérieure existe dans la gamme confortable et que la température intérieure uniforme (S202) soit satisfaite.

3. Procédé d'opération de déshumidification motorisée selon la revendication 1, dans lequel l'algorithme de fonctionnement du compresseur comprend les étapes consistant à :
(i) détecter l'humidité intérieure par le capteur d'humidité intérieure installé dans le climatiseur (1) et comparer l'humidité intérieure détectée à l'humidité de consigne (S208) pour obtenir la différence d'humidité (ΔH) entre l'humidité intérieure détectée et l'humidité de consigne (S208) ;
(ii) comparer la différence d'humidité (ΔH) obtenue à l'étape (i) à une différence d'humidité de référence (△H) réglée dans le climatiseur (1) ; et
(iii) régler la fréquence du compresseur (11) en correspondance à la différence d'humidité (ΔH) (humidité intérieure - humidité de consigne) selon la comparaison à l'étape (ii).

4. Procédé d'opération de déshumidification motorisée selon la revendication 1, dans lequel l'algorithme de fonctionnement du compresseur règle la fréquence du compresseur (11) à une fréquence de rotation maximale (Fₘₐₓ) si la différence d'humidité (ΔH) est de 30 % ou plus, maintient la fréquence de rotation maximale si la différence d'humidité (ΔH) est supérieure ou égale à 10 % et inférieure ou égale à 29 %, règle la fréquence à une première fréquence de compresseur (11) Fₘₐₓ₋₁ qui est inférieure d'un pas à la fréquence de rotation maximale si la différence d'humidité (ΔH) est supérieure ou égale à 5 % et inférieure ou égale à 9 %, à une deuxième fréquence de compresseur (11) Fₘₐₓ₋₂ qui est inférieure d'un pas à la première fréquence de compresseur (11) Fₘₐₓ₋₁ si la différence d'humidité (ΔH) est supérieure ou égale à 0 % et inférieure ou égale à 4 %, à une troisième fréquence de compresseur (11) Fₘₐₓ₋₃ qui est inférieure d'un pas à la deuxième fréquence de compresseur (11) Fₘₐₓ₋₂ si la différence d'humidité (ΔH) est supérieure ou égale à -5 % et inférieure ou égale à -1 %, et à 0 (arrêt) si la différence d'humidité (ΔH) est de -6 % ou moins.

5. Procédé d'opération de déshumidification motorisée selon la revendication 1, dans lequel l'algorithme de fonctionnement du ventilateur extérieur comprend les étapes consistant à :
(i) comparer la fréquence du compresseur (11) commandée de manière ajustable via l'algorithme de fonctionnement du compresseur à l'humidité intérieure détectée par le capteur d'humidité intérieure installé dans le climatiseur (1) ; et
(ii) régler la vitesse de rotation du ventilateur extérieur (22) en proportion de la fréquence commandée de manière ajustable du compresseur (11), moyennant quoi l'opération de déshumidification intérieure peut être effectuée dans une condition agréable via la fréquence commandée de manière ajustable du compresseur (11).

6. Procédé d'opération de déshumidification motorisée selon la revendication 1, dans lequel l'algorithme de fonctionnement du ventilateur extérieur règle la vitesse de rotation du ventilateur extérieur (22) à des valeurs différentes correspondant aux pas de différence d'humidité (ΔH), et
dans une condition où une vitesse de rotation de référence du ventilateur extérieur (22) est réglée à 46 lorsque la différence d'humidité (ΔH) est de 30 % ou plus, la vitesse de rotation du ventilateur extérieur (22) est réglée à 54 lorsque la différence d'humidité (ΔH) est supérieure ou égale à 25 % et inférieure ou égale à 29 %, à 62 lorsque la différence d'humidité (ΔH) est supérieure ou égale à 20 % et inférieure ou égale à 24 %, à 69 lorsque la différence d'humidité (ΔH) est supérieure ou égale à 15 % et inférieure ou égale à 19 %, à 77 lorsque la différence d'humidité (ΔH) est supérieure ou égale à 10 % et inférieure ou égale à 14 %, à 85 lorsque la différence d'humidité (ΔH) est supérieure ou égale à 5 % et inférieure ou égale à 9 %, à 92 lorsque la différence d'humidité (ΔH) est supérieure ou égale à 0 % et inférieure ou égale à 4 %, à 100 lorsque la différence d'humidité (ΔH) est supérieure ou égale à -5 % et inférieure ou égale à -1 %, et à 0 (arrêt) lorsque la différence d'humidité (ΔH) est de -6 % ou moins.

7. Procédé d'opération de déshumidification motorisée selon la revendication 1, dans lequel la vitesse de rotation du ventilateur intérieur (35) est maintenue en continu à un 'vent spécial fort' qui est la vitesse de rotation maximale du ventilateur intérieur (35) tandis que l'opération de déshumidification motorisée est maintenue à partir d'une étape initiale où la déshumidification motorisée est choisie et mise en fonctionnement.

8. Procédé d'opération de déshumidification motorisée selon la revendication 1, comprenant la détermination de la fréquence du compresseur (11) via l'algorithme de fonctionnement du compresseur selon la différence d'humidité (ΔH) entre l'humidité de consigne (S208) et l'humidité intérieure.

9. Procédé d'opération de déshumidification motorisée selon la revendication 1, comprenant l'ajustement de la vitesse de rotation du ventilateur extérieur (22) via l'algorithme de fonctionnement du ventilateur extérieur selon ladite différence de température (S201) entre la température de consigne et la température intérieure.

10. Procédé d'opération de déshumidification motorisée selon la revendication 1, dans lequel :
- à l'étape (a), l'étape consistant à comparer l'humidité intérieure détectée à une humidité de consigne ((208)) comprend le réglage de ladite humidité de consigne par une unité de commande comprenant une unité de commande à distance, et
- à l'étape (c), l'étape consistant à comparer la température intérieure détectée à une température de consigne comprend le réglage de ladite température de consigne par l'unité de commande.
